# EUROPÄISCHE PATENTANMELDUNG

(11) **EP 0 816 389 A2**
(43) Veröffentlichungstag der Anmeldung: **07.01.1998**
(21) Anmeldenummer: 97110349.4
(22) Anmeldetag: 25.06.1997
(51) Int. Cl.: C08F 8/00, C09D 11/10

(54) **Modifizierte Kohlenwasserstoffharze**

(30) Priorität: 03.07.1996 DE 19626723
(71) Anmelder: Vianova Resins GmbH, 55252 Mainz-Kastel (DE)
(72) Erfinder: Bender, Albert, Dr., 55130 Mainz (DE)

(57) **Zusammenfassung**

Modifiziertes Kohlenwasserstoffharz herstellbar durch Umsetzung von jeweils mindestens einer Verbindung aus jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomere mit Polymerisationsgraden von 2 bis 10,
B) Fettsäuren und/oder Fettsäureester,
C) Naturharze und/oder Naturharzsäuren,
D) α,β-olefinisch ungesättigte Carbonsäuren und deren Anhydriden,
E) Verbindungen zweiwertiger Metalle.

## Beschreibung

Die Erfindung betrifft Kohlenwasserstoffharze aus Copolymerisaten von zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 sowie Verfahren zu ihrer Herstellung und ihre Verwendung als Bindemittelharze in Druckfarben vorzugsweise für den Toluoltiefdruck.

Bindemittelharze für Tiefdruckfarben mit Toluol müssen den Drucken eine rasche Trocknung, einen guten Stand auf der Oberfläche des Bedruckstoffs, eine gute Scheuerfestigkeit sowie einen hohen Glanz verleihen. Dies gilt insbesondere auf nicht oder nur schwach gestrichenen und daher stark saugenden Naturpapieren.

Es sind bereits Bindemittelharze auf Basis polymerisierter Kohlenwasserstoffe bekanntgeworden, die diese Forderungen erfüllen sollen.

Beispielsweise sind Verfahren bekannt, Naturharze mit polymerisierten Kohlenwasserstoffen auf C₅-Basis, die auch als Mischpolymerisate mit Maleinsäureanhydrid oder Naturharzsäuren vorliegen können, α,β-ungesättigten Dicarbonsäureeinheiten und Calciumverbindungen in Gegenwart von Essigsäure zu niedrigviskosen Bindemittelharzen umzusetzen (US-A 4,528,036, US-A 4,552,592). Diese Verfahren haben jedoch den bekannten Nachteil, daß hochviskose Schmelzen entstehen, die zu Verkrustungen und Ablagerungen an der Kesselwandung führen, und die mit den üblicherweise im technischen Maßstab verwendeten Rühraggregaten nur schwer zu bearbeiten sind. Auch ist es nachteilig, daß die hierfür geeigneten Kohlenwasserstoffharze spezielle Polymerisate sind, die bei Temperaturen von 220 bis 280 °C separat in speziellen Druckapparaturen bei Drücken zwischen 0,6 MPa (6 bar) und 1,5 MPa (15 bar) durch thermische Polymerisation hergestellt werden müssen, bevor sie in die eigentliche Reaktion eingesetzt werden. Die üblicherweise zur Herstellung von Bindemittelharzen für Druckfarben verwendeten Apparaturen sind nämlich im allgemeinen für Drücke von höchstens 0,6 MPa (6 bar) ausgelegt. Ein in zwei Kesseln durchzuführender Prozeß ist aber unwirtschaftlich.

Zusätzlich können beim Befüllen von Produktionsanlagen mit diesen in fester Form anfallenden Polymerisaten Harzstäube entstehen, die toxikologisch nicht unbedenklich sind, da sie bekanntlich sensibilisierende Eigenschaften besitzen. Zwar besitzen diese Bindemittelharze eine ausgezeichnete Dispergierwirkung für Buntpigmente, doch ist ihre Leistung in Schwarzfarben, die mit dem schlecht dispergierbaren Ruß aufgebaut sind, unbefriedigend, was sich im Glanzabfall der Farben äußert. Hier bilden sie nach dem Druck wenig elastische, dafür aber sehr spröde Farbfilme, die dann eine ungenügende Scheuerfestigkeit besitzen. Dies ist insbesondere bei den inzwischen sehr hoch gewordenen Druckgeschwindigkeiten von mehr als 20 m/s von großem Nachteil, da es wegen der erhöhten mechanischen Belastung zum Farbabrieb und zur Verschmutzung auf den Umlenkrollen der Papierbahn kommt.

Bekannt ist auch die Copolymerisation von Dicyclopentadien mit Tallöl (US-A 2,598,424), Fettsäuren (US-A 2,522,889) und Naturharzsäuren (US-A 2,598,425) unter Druck und bei hohen Temperaturen. Diese Produkte sind zwar für Lackanstriche verwendbar, sind aber als Bindemittelharze in Druckfarben für den Toluoltiefdruck unbrauchbar.

Ähnliches gilt für Produkte, die beschrieben sind in DE-B 22 46 283, und die hergestellt werden durch Umsetzung von Tallölfettsäure mit einem durch Polymerisation hergestellten Kohlenwasserstoffharz aus Cyclopentadien in Gegenwart von Metallsalzen und gegebenenfalls Phenolen.

Es ist auch bereits bekannt, Copolymerisate aus Dicyclopentadien und Kolophonium, die bei Drücken von 0,9 MPa (9 bar) hergestellt werden, mit Phenol-Aldehyd-Kondensationsprodukten aber ohne α,β-ungesättigte Carbonsäuren und deren Anhydriden in Gegenwart von Verbindungen einwertiger oder zweiwertiger Metalle zu Bindemittelharzen weiterzureagieren, die aber nur für Farben für den Offsetdruck geeignet sind (EP-A 0 580 954, US-A 5,376,719).

Beschrieben ist auch, Tallölfettsäure, Kolophonium, Styrol, Dicyclopentadien, Maleinsäureanhydrid und Resole in Gegenwart von Magnesiumverbindungen zusammen in einer einstufig verlaufenden Reaktion bei hohen Temperaturen und Drücken umzusetzen. Die Bindemittelharze sind für Tiefdruckfarben verwendbar (DE-A 35 31 242). Sie besitzen jedoch den Nachteil, daß damit formulierte Farben bei hohen Druckgeschwindigkeiten relativ langsam trocknen.

Aus DE-B 25 27 719 ist auch bekannt, Cyclopentadien, α,β-äthylenisch ungesättigte Dicarbonsäuren bzw. deren Anhydride, Harzsäuren und Metallverbindungen miteinander zu Bindemittelharzen für Tiefdruckfarben umzusetzen.

Hierbei wird jedoch das Cyclopentadien entweder alleine zu einem Homopolymerisat oder zusammen mit wenigstens der α,β-äthylenisch ungesättigten Dicarbonsäure zu einem Copolymerisat umgesetzt. Es ist bekannt, daß diese Homopolymerisate und Copolymerisate eine starke Wärmereaktivität besitzen und sich deshalb die nachfolgenden, bei hoher Temperatur durchgeführten Folgereaktionen nur schwer beherrschen lassen.

Es bestand daher die Aufgabe, diese Schwierigkeiten der bekannten Produkte bzw. der bekannten Verfahren zu überwinden, und verbesserte Bindemittelharze für Toluoltiefdruckfarben zur Verfügung zu stellen, die diese Nachteile nicht aufweisen, d. h. die im Vergleich zum Stand der Technik eine verbesserte Scheuerfestigkeit und bessere Benetzungseigenschaften für Ruß aufweisen, mit denen sich rasch trocknende Farben formulieren lassen, die bei der Herstellung niederviskose Schmelzen mit abgeschwächter Wärmereaktivität ergeben, bei denen beim Befüllen von Kesselanlagen keine Polymerisatstäube entstehen und die gegebenenfalls auch bei Drücken unter 0,6 MPa (6 bar) in einem Einkesselverfahren hergestellt werden können.

Diese Aufgabe konnte dadurch gelöst werden, daß man zwei- oder mehrfach ungesättigte lineare, verzweigte oder cyclische Kohlenwasserstoffe mit 4 bis 10 Kohlenstoffatomen sowie deren gegebenenfalls auch gemischte Oligomere mit Polymerisationsgraden von 2 bis 10 mit Fettsäuren und/oder Fettsäureestern, α,β-ungesättigten Carbonsäuren und deren Anhydriden sowie mit zweiwertigen Metallverbindungen mehrstufig zur Reaktion bringt, wobei die gesamte Umsetzung in Anwesenheit von Naturharzen und/oder Naturharzsäuren stattfindet. Die Verbesserung von Verfahren und Produkteigenschaften gegenüber dem Stand der Technik durch die getroffenen Maßnahmen war nicht vorhersehbar und ist deshalb als überraschend zu bezeichnen.

Gegenstand der Erfindung sind daher modifizierte Kohlenwasserstoffharze herstellbar durch Umsetzung von jeweils mindestens einer Verbindung aus jeder der Gruppen
A) zwei- oder mehrfach ungesättigte lineare, verzweigte oder cyclische Kohlenwasserstoffe mit 4 bis 10 Kohlenstoffatomen sowie deren gegebenenfalls auch gemischte Oligomere mit Polymerisationsgraden von 2 bis 10,
B) Fettsäuren und/oder Fettsäureester,
C) Naturharze und/oder Naturharzsäuren,
D) α,β-ungesättigte Carbonsäuren und deren Anhydride,
E) Verbindungen zweiwertiger Metalle,
bevorzugt durch Umsetzung von jeweils mindestens einer der Verbindungen der Gruppe A) und der Gruppe B) in der ersten Stufe, und anschließende Umsetzung des Reaktionsprodukts dieser ersten Stufe mit jeweils mindestens einer Verbindung aus jeder der Gruppen D) und E), wobei die gesamte Umsetzung in Anwesenheit von mindestens einer Verbindung der Gruppe C) stattfindet, bevorzugt bei einem Druck von über 0, 1 MPa (1 bar) und einer Temperatur von 100 bis 300 °C unter Wasserabspaltung.

Als Verbindungen der Gruppen A) bis E) finden vorzugsweise Verwendung:
A) Cyclopentadien, dessen Oligomere, wie Di-, und durch Diels-Alder-Addition erhältliche Tri- und Tetramere sowie deren Alkylderivate mit mindestens einer Alkylgruppe mit jeweils 1 bis 4 Kohlenstoffatomen in der Alkylgruppe oder Cooligomere dieser Verbindungen mit anderen mehrfach ungesättigten Kohlenwasserstoff-Verbindungen mit 4 bis 10, bevorzugt 4 bis 8 Kohlenstoffatomen, z.B. Methylcyclopentadien, Cyclopentadien-Isopren-Dimere, Cyclopentadien-Piperylen-Dimere, die allesamt flüssig und daher über geschlossene Leitungssysteme problemlos dosierbar sind. Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C₅-Fraktion entstehen, wobei diese C₅-Fraktion als Nebenprodukt bei der thermischen Zersetzung von Naphtha und entsprechenden Erdölfraktionen anfallt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cylopentadien und Isopren, ein gemischtes Dimeres aus Cyclopentadien-Piperylen und andere entsprechende dimere Substanzen umgewandelt.
   In diesen Fraktionen können noch weitere ungesättigte Monomere, wie z.B. Propylen, Buten, Butadien, Penten, Cyclopenten oder Cyclohexen enthalten sein. Auch können sogenannte C₉-Fraktionen, die als Nebenprodukt bei der Crackung von Naphtha und dgl. enstehen, enthalten sein. Diese bestehen dann beispielsweise aus Styrol, α-Methylstyrol, Vinyltoluol, Inden, Methylinden oder Mischungen davon. Demzufolge ist eine höhere Reinheit der Komponente A) nicht immer erforderlich, es ist jedoch bevorzugt, daß in der Komponente A) Cyclopentadien, dessen Oligomere und davon abgeleitete Verbindungen wie Alkyl-substituierte und deren Oligomere in einem Massenanteil von 70 % oder mehr vorliegen,
B) tierische, pflanzliche oder durch Raffination gewonnene Fettsäuren und Fettsäureester, insbesondere in Form von vegetabilischen oder tierischen Fettsäuren und Ölen, beispielsweise Palmitin- oder Stearinsäure, vorzugsweise jedoch ungesättigte Fettsäuren wie Öl- und Tallölfettsäure, dimerisierte und trimerisierte Fettsäuren, Öle, wie Tallöl, Fettsäureglycerinester wie Baumwollsaat-, Soja-, Lein-, Holz-, Fisch-, Rizinusöl, Kokosfett und hydriertes Kokosfett,
C) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene oder auch die bekannten Anlagerungsprodukte von α,β-äthylenisch ungesättigten Carbonsäuren oder deren Anhydride an die Naturharzsäuren enthalten können,
D) α,β-äthylenisch ungesättigte Carbonsäuren oder deren Anhydride, insbesondere Fumarsäure, Maieinsäure, Maleinsäureanhydrid, Itaconsäure, Zimtsäure, Acrylsäure, Methacrylsäure,
E) Verbindungen zweiwertiger Metalle, vorzugsweise ihre Oxide, Hydroxide, Carbonate, Hydrogencarbonate, Acetate, Stearate, Oleate, insbesondere die des Magnesiums, Calciums und Zinks.

Die Massenanteile der einzelnen Verbindungen, bezogen auf die Gesamtmasse der eingesetzten Verbindungen (= 100 %), bei der Herstellung der erfindungsgemäßen modifizierten Kohlenwasserstoffharz beträgt vorzugsweise für die Komponenten
A) 10 bis 90, vorzugsweise 20 bis 70, insbesondere 30 bis 60 %,
B) 1 bis 90, vorzugsweise 10 bis 80, insbesondere 25 bis 70 %,
C) 1 bis 90, vorzugsweise 10 bis 60, insbesondere 20 bis 50 %,
D) 0,1 bis 20, vorzugsweise 2 bis 10, inbesondere 3 bis 8 %,
E) 0,1 bis 20, vorzugsweise 1 bis 10, insbesondere 3 bis 8 %.

Die Erfindung betrifft auch Verfahren zur Herstellung modifizierter Kohlenwasserstoffharze, bei denen die genannten Komponenten A) bis E) miteinander bei einer Temperatur von über 150 °C, oder mindestens einer Temperatur, bei der die Mischung der Edukte in flüssiger Form vorliegt, miteinander umgesetzt werden. Vorzugsweise wird die Reaktion jedoch in mehreren Stufen durchgeführt, wobei in einer bevorzugten Ausführungsform in der ersten Stufe die Komponenten A), B) und gegebenenfalls C) zunächst bei einer Temperatur von 200 bis 300 °C, vorzugsweise 220 bis 270 °C, und unter einem Druck von vorzugsweise 0,1 bis 0,6, insbesondere 0,2 bis 0,4 MPa (vorzugsweise 1 bis 6, insbesondere 2 bis 4 bar), miteinander zur Reaktion gebracht werden, und dann das erhaltene Polymerisat vorzugsweise drucklos mit den Verbindungen D) und E) und gegebenenfalls C) im Temperaturbereich von 200 bis 280 °C, vorzugsweise 220 bis 270 °C, unter Wasserabspaltung umgesetzt wird.

Die Copolymerisation der Verbindungen der Substanzklassen A) und B) kann radikalisch oder vorzugsweise thermisch durchgeführt werden. Geeignete Katalysatoren für die radikalische Polymerisation, die weniger bevorzugt ist, sind beispielsweise Peroxide, wie Dibutylperoxid, Benzylperoxid, Tolylperoxid, tertiär-Butylhydroperoxid, Cumolhydroperoxid oder dergleichen.

Die Copolymerisation kann so durchgeführt werden, daß man die Komponenten mischt und dann den Ansatz auf die gewünschte Temperatur bringt. Aus Sicherheitsgründen ist es allerdings ratsam, die Komponente der Substanzklasse B) vorzulegen, auf die gewünschte Temperatur zu bringen, und dann die Komponente A) zuzudosieren.

Selbstverständlich kann man bei der Copolymerisation der Verbindungen der Substanzklassen A) und B) auch in Gegenwart von inerten Lösungsmitteln arbeiten. Es eignen sich hierzu beispielsweise aromatische Kohlenwasserstoffe, wie Benzol, Toluol, Xylole und Tetrahydronaphthalin, ferner aliphatische Kohlenwasserstoffe wie Isooctan, Testbenzin sowie Gemische alkylierter Benzole mit einem Siedebereich von 100 bis 200 °C. Allerdings ist bei der Verwendung relativ niedrigsiedender Lösungsmittel damit zu rechnen, daß bei der hohen Reaktionstemperatur dann Drücke entstehen, die über die bevorzugte Grenze von 0,6 MPa (6 bar) hinausgehen. Beispielsweise werden mit Xylol als Lösungsmittel Drücke zwischen 1 und 1,5 MPa (10 und 15 bar) erhalten.

Der Vorteil der Reaktionsführung bei niedrigem Druck ist dann zwar verloren, sofern die Apparaturen es zulassen, ist diese Verfahrensvariante aber trotzdem möglich. Vor der Durchführung der Folgereaktionen wird das Lösungsmittel zweckmäßigerweise abdestilliert. Diese Verfahrensvariante ist weniger bevorzugt, jedoch soll die Erfindung dadurch nicht eingeschränkt werden.

Zur Herstellung werden die in der Naturharzchemie üblichen Apparaturen verwendet. Sie bestehen üblicherweise aus einem Stahlkessel, der mit Wärmeträgeröl beheizt werden kann, der für Druckreaktionen ausgelegt und mit einer Dosier- und Destillationsvorrichtung sowie einem Rührwerk ausgerüstet ist.

In einer ersten Ausführungsform wird zunächst diese Apparatur mit der Fettsäure und/oder Fettsäureester B) beschickt und diese Mischung auf eine Temperatur von vorzugsweise 220 bis 270 °C erhitzt. Dann wird die Apparatur verschlossen und gegen den sich aufbauenden Druck flüssiges Cyclopentadien und flüssige Cyclopentadienverbindungen A) so zudosiert, daß ein Druck von vorzugsweise 0,6 MPa (6 bar), insbesondere jedoch 0,4 MPa (4 bar), nicht überschritten wird. Beispielsweise sind bei einem Copolymerisat, das die Komponenten A) : B) im Gewichtsverhältnis 2 : 1 enthält, bei einer Reaktionstemperatur von 260 °C dazu Dosierzeiten von ca. 6 Stunden notwendig. Besonders günstig verhalten sich Tallölfettsäure sowie Tallöl. Nach beendeter Reaktion, die am Druckabfall erkennbar ist, wird die Apparatur drucklos gestellt.

Wird mit Lösungsmitteln gearbeitet, so wird vorzugsweise die Fettsäure und/oder Fettsäureverbindung (Substanzklasse B) zusammen mit dem Lösungsmittel vorgelegt, die Lösung auf Reaktionstemperatur gebracht und gegen den sich bildenden Druck die Cyclopentadienverbindung (Substanzklasse A) zudosiert. Nach beendeter Reaktion und Absenken des Drucks auf Normaldruck wird zweckmäßigerweise das Lösungsmittel durch Destillation entfernt.

Dann wird der Schmelze das Naturharz und/oder die Naturharzsäure der Substanzgruppe C) sowie die Metallverbindung der Substanzgruppe E) hinzugefügt, was vorzugsweise bei einer Temperatur von 240 bis 260 °C erfolgt. Zweckmäßigerweise wird die Metallverbindung nicht als Feststoff, sondern in Form einer Suspension, beispielsweise in Xylol, zugetropft. Das dabei entstehende Wasser und weitere flüchtige Anteile werden abdestilliert. Nach dieser Zugabe wird dann zur Vervollständigung der Reaktion die α,β-ungesättigte Carbonsäure und/oder deren Anhydrid D) in die Schmelze eingerührt.

In einer zweiten Ausführungsform ist es ist jedoch auch möglich, das durch die Druckpolymerisation von A) mit B) im ersten Schritt erhaltene Copolymerisat im zweiten Schritt mit C) und dann mit der α,β-ungesättigten Carbonsäure und/oder deren Anhydrid D) zu reagieren, bevor im dritten Schritt die Umsetzung mit der Metallverbindung E) erfolgt. Dabei kann die Reihenfolge der Zugabe von C) und D) auch umgekehrt werden, oder C) und D) können gemeinsam zugegeben werden.

Es war nicht vorhersehbar und ist deshalb als überraschend zu bezeichnen, daß in beiden Ausführungsformen unterschiedliche Produkte entstehen. Bei gleicher Zusammensetzung sind die in der ersten Ausführungsform erhaltenen Produkte im Lösungsmittel Toluol relativ niederviskos, die der zweiten Ausführungsform dagegen hochviskos. Damit läßt sich über die Reihenfolge der Zugabe bequem die gewünschte Viskosität der Bindemittelharze einstellen, was ein außerordentlicher Vorteil ist.

In einer dritten Ausführungsform kann man jedoch auch zunächst die Fettsäure und/oder den Fettsäureester B) und das Naturharz und/oder die Naturharzsäure C) vorlegen, diese auf eine Temperatur von vorzugsweise 220 bis 270 °C erhitzen und dann in die verschlossene Apparatur gegen den sich aufbauenden Druck die flüssige Komponente A) zudosieren. Bei dieser Ausführungsform hat es sich bewährt, die α,β-ungesättigte Carbonsäure und/oder deren Anhydrid D) vor der Zugabe der Metall-verbindung E) anzulagern, da ansonsten stark schäumende Ansätze entstehen, die die Durchführung erschweren.

In weiteren Ausführungsformen ist es auch möglich, die Komponente D) bereits vollständig oder anteilig in die Polymerisationsreaktion von A) mit B) und gegebenenfalls C) mit einzubeziehen, oder auch ein Naturharz und/oder eine Naturharzsäure einzusetzen, die bereits mit der α,β-ungesättigte Carbonsäure und/oder deren Anhydrid modifiziert sind.

Es ist leicht vorstellbar, daß noch weitere Änderungen in der Reihenfolge der Zugaben möglich sind, die jedoch durch die beschriebenen Ausführungsformen nicht eingeschränkt sein sollen.

Im allgemeinen ist es nicht notwendig, den Ansätzen zur Vervollständigung der Umsetzung mit Metallverbindungen der Substanzklasse E) Säuren hinzuzufügen.

Bei sehr hohen Konzentrationen an Metallverbindungen kann jedoch ein Säurezusatz vorteilhaft sein, um eine vollständige Umsetzung herbeizuführen, ohne daß die Schmelzeviskosität nachteilig erhöht wird. Als Säuren können vorzugsweise Carbonsäuren verwendet werden, wie beispielsweise Essigsäure, Isononansäure, Tallölfettsäure, Cyclohexancarbonsäure, Benzoesäure, Zitronensäure, Weinsäure.

Ihr Massenanteil bezogen auf die Summe aller reaktiven Komponenten liegt vorzugsweise unter 5 % bezogen auf die Gesamtmasse der eingesetzten Verbindungen A bis E (≡ 100%).

Der Fortgang der Reaktion kann zweckmäßigerweise durch die Bestimmung der Viskositätswerte in einem Lösungsmittel ermittelt werden, wie beispielsweise Toluol. Die Reaktion kann dann beim gewünschten Stadium abgebrochen werden, wobei gegebenenfalls flüchtige Anteile durch kurzzeitiges Evakuieren des Ansatzes entfernt werden.

Die erfindungsgemäßen Bindemittelharze fallen nach Abkühlen der Schmelze zunächst als Feststoff an. Die Schmelze kann jedoch durch Zugabe von Lösungsmittel wie Toluol oder auch Benzinfraktionen in einen Firnis überführt werden, wobei alle Übergänge von einer festen bis zu einer flüssigen Ausführung möglich sind.

Zur Bestimmung der Viskositäten werden beispielsweise Lösungen in Toluol mit einem Massenanteil an Harz von 50 % in der Lösung mit einem üblichen Rotationsviskosimeter bei 23 °C vermessen. Die Viskositäten liegen vorzugsweise in einem Bereich von 50 bis 20 000 mPa·s, insbesondere jedoch 100 bis 5 000 mPa·s. Diese Bereiche können jedoch auch über- oder unterschritten werden.

Die molare Masse der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Die gewichtsmittlere molare Masse M_{w} der erfindungsgemäßen Harze liegt gemäß den erhaltenen Meßergebnisssen vorzugsweise über 500 g/mol und ist nach oben nicht kritisch begrenzt. Besonders bevorzugt liegt M_{w} jedoch in einem Bereich von 1000 und 50 000 g/mol. Die durch Umsetzung von A) mit B) und gegebenenfalls C) entstandenen Copolymerisate weisen vorzugsweise eine gewichtsmittlere molare Masse von 800 bis 40 000 g/mol auf.

Die erfindungsgemäßen Harze besitzen bei 250 °C und einem Schergefalle von 100 s⁻¹ eine Schmelzeviskosität vorzugsweise im Bereich von 1 000 bis 5 000 mPa·s.

Die erfindungsgemäßen Harze können auch während oder nach der eigentlichen Umsetzung durch Zugabe weiterer Substanzen modifiziert werden, wie es bei der Herstellung von Druckfarbenharzen üblich ist. Beispielsweise ist es möglich, niedermolekulare Verbindungen wie beispielsweise Kolophonium, Kolophoniumester, Mineralöle, oder Polymere wie Kondensationsprodukte aus Phenolen und Aldehyden, wie z. B. Resole oder Novolake, Polyester, modifizierte Kohlenwasserstoffharze, Phenolharz-modifizierte Naturharzsäureester zuzugeben, um die Lösungsviskosität zu optimieren, wie es z. B. in der deutschen Patentanmeldung DE-P 195 38 954.9 beschrieben ist. Es ist aber auch möglich, den Ansätzen saure Katalysatoren hinzuzufügen. Dies ist insbesondere dann interessant, wenn eine Modifizierung mit Phenolharz, Phenol oder Formaldehyd beabsichtigt ist. Als Katalysatoren seien z. B. genannt Sulfonsäuren wie Benzolmono- und -disulfonsäure, Phenolsulfonsäure, p-Toluolsulfonsäure; Beispiele für solche Verfahren sind aufgeführt in US-A 4,528,036.

Die beim Stand der Technik beschriebenen Verfahren (US-A 4,528,036; US-A 4,552,592) benötigen zwingend die Mitverwendung von Calciumverbindungen. Die ausschließliche Verwendung von Magnesium- oder Zinkverbindungen, wie sie bei Druckfarbenharzen erwünscht sein kann- ist aber nicht möglich, da trübe Harze und Harzlösungen mit unlöslichen Anteilen resultieren, die die Produkteigenschaften stark beeinträchtigen und die Bindemittelharze sogar unbrauchbar machen können. Mit Magnesium- und Zinkverbindungen aufgebaute Harze zeigen aber häufig eine sehr gute Pigmentbenetzung. Es ist ein ganz besonders großer Vorteil der Erfindung, daß sich Produkte herstellen lassen, die sowohl im Festzustand wie auch in toluolischer Lösung völlig blank (d.h. ohne für das unbewaffnete Auge sichtbare Trübung) sind. Sie besitzen deshalb ein ausgezeichnetes Benetzungsverhalten für die im Illustrationstiefdruck verwendeten Pigmente.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol.

Die erfindungsgemäßen Harze weisen eine ausgezeichnete Verträglichkeit mit anderen Bindemitteln auf, beispielsweise mit modifizierten Naturharzsäureestern des Standes der Technik, Resinaten, Kohlenwasserstoffharzen oder Chlorkautschuk, wodurch sie breit einsetzbar sind. Außerdem zeichnen sie sich vorteilhaft durch einen vergleichsweise flachen Viskositätsverlauf beim Verdünnen mit Toluol aus, ihre Viskosität nimmt also auch bei steigendem Harzgehalt nur wenig zu. Diese Eigenschaft ist beim Dispergiervorgang besonders wichtig, da die Pigmente möglichst viel Harz für eine optimale Benetzung benötigen, die entstehenden Konzentrate und Anreibungen aber immer noch gut fließfähig, d. h. niedrigviskos sein sollen. Dies macht sie insbesondere auch überlegen gegenüber Bindemittelharzen des Standes der Technik, da diese ein wesentlich ungünstigeres Verdünnungsverhalten zeigen. Dieses unterschiedliche Verhalten der Bindemittelharze ist als außerordentlich überraschend zu bezeichnen.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können beispielsweise Füllstoffe wie Calciumcarbonat oder grenzflächenaktive Mittel zur Verbesserung der Pigmentdispersion wie Lecithin oder Wachse zur Verbesserung der Scheuerfestigkeit mitverwendet werden.

Die Erfindung wird durch die nachfolgenden Beispiele näher erläutert, ohne sie jedoch einzuschränken. Gehalts- und Konzentrations-Angaben in Teilen oder Prozent in den Beispielen sind stets Massenanteile, soweit nicht anders vermerkt.

Die angegebenen Säurezahlen werden nach DIN 53 402 gemessen. Die Angabe erfolgt üblicherweise in der Einheit "mg/g". Die Säurezahl ist definiert als der Quotient der zur Neutralisation einer bestimmten Masse *m*_{B} der Probesubstanz erforderlichen Masse an Kaliumhydroxid *m*_{KOH} und der Masse der (unverdünnten) Probe *m*_{B}.

Die Lösungsviskositäten in den nachfolgenden Beispielen werden an toluolischen Lösungen mit einem Massenanteil an Harz in der Lösung von 50 % bei einer Temperatur von 23 °C bestimmt.

### Beispiel 1 Herstellung eines Bindemittelharzes nach der ersten Ausführungsform durch Reaktion von Dicyclopentadien mit Tallölfettsäure und anschließender Unsetzung mit Kolophonium, Calciumhydroxid und Maleinsäureanhydrid:

In einer 3 l-Stahlapparatur werden 430 g Tallölfettsäure auf 260 °C erhitzt. Dazu werden innerhalb von 6 h 946 g Dicyclopentadien mit einem Gehalt von 80 % Cyclopentadien-Einheiten zudosiert und weitere 5 h unter Rühren bei dieser Temperatur gehalten; dabei bildet sich der zunächst auf 0,38 MPa (3,8 bar) gestiegene Druck auf 0,2 MPa (2 bar) zurück. Dann wird auf Normaldruck entspannt. Die durch Gelpermeationschromatographie ermittelte gewichtsmittlere molare Masse M_{w} einer Probe beträgt 4770 g/mol.

Danach gibt man 755 g Kolophonium zu und rührt ein halbe Stunde nach. Dann werden 108 g Calciumhydroxid, suspendiert in 150 g Xylol, während einer Stunde zudosiert, wobei das entstehende Wasser und weitere flüchtige Anteile abdestilliert werden. Man rührt noch eine halbe Stunde nach und dosiert anschließend während 5 min 93 g Maleinsäureanhydrid zu. Man rührt noch zwei weitere Stunden, evakuiert dann 5 min bei 10 kPa (100 mbar), stellt auf Atmosphärendruck und entleert den Ansatz. Es werden 2400 g blankes Harz mit dem Erweichungspunkt 125 °C und einer Lösungsviskosität von 1325 mPa·s (blanke Lösung) erhalten. Die durch Gelpermeationschromatographie ermittelte gewichtsmittlere molare Masse M_{w} beträgt 2350 g/mol. Das Harz besitzt bei 250 °C und einem Schergefälle von 100 s⁻¹ eine Schmelzviskosität von 3 800 mPa·s.

### Beispiel 2 Herstellung eines Bindemittelharzes nach der zweiten Ausführungsform durch Reaktion von Dicyclopentadien mit Tallölfettsäure und anschließender Umsetzung mit Kolophonium, Maleinsäureanhydrid und Calciumhydroxid:

In einer 3 l-Stahlapparatur werden 430 g Tallölfettsäure auf 260 °C erhitzt. Dazu werden innerhalb von 6 h 946 g Dicyclopentadien mit einem Gehalt von 80 % Cyclopentadien-Einheiten zudosiert und weitere 5 h unter Rühren bei dieser Temperatur gehalten; dabei bildet sich der zunächst auf 0,38 MPa (3,8 bar) gestiegene Druck auf 0,2 MPa (2 bar) zurück. Dann wird auf Atmosphärendruck entspannt und 755 g Kolophonium sowie 93 g Maleinsäureanhydrid zugegeben und eine halbe Stunde nachgerührt. Danach werden 108 g Calciumhydroxid, suspendiert in 150 g Xylol, während einer Stunde zudosiert, wobei das entstehende Wasser und weitere flüchtige Anteile abdestilliert werden. Man rührt noch zwei weitere Stunden, evakuiert dann 5 min bei 10 kPa (100 mbar), stellt auf Atmosphärendruck und entleert den Ansatz. Es werden 2400 g blankes Harz mit dem Erweichungspunkt 135 °C und einer Lösungsviskosität von 11 000 mPa·s (blanke Lösung) erhalten. Die durch Gelpermeationschromatographie ermittelte gewichtsmittlere molare Masse M_{w} beträgt 3230 g/mol.

### Beispiel 3 Herstellung eines Bindemittelharzes nach der dritten Ausführungsform durch Reaktion von Dicyclopentadien mit Tallölfettsäure und Kolophonium und anschließender Umsetzung mit Maleinsäureanhydrid und Calciumhydroxid:

In einer 3 l-Stahlapparatur werden 500 g Tallölfettsäure und 500 g Kolophonium auf 260 °C erhitzt. Dazu werden innerhalb von 6 h 1000 g Dicyclopentadien mit einem Gehalt von 80 % Cyclopentadien-Einheiten zudosiert und weitere 5 h unter Rühren bei dieser Temperatur gehalten; dabei bildet sich der zunächst auf 0,4 MPa (4 bar) gestiegene Druck auf 0,25 MPa (2,5 bar) zurück. Die durch Gelpermeationschromatographie ermittelte gewichtsmittlere molare Masse M_{w} einer Probe beträgt 1670 g/mol.

Danach gibt man 100 g Maleinsäureanhydrid zu und rührt ein halbe Stunde nach. Dann werden 110 g Calciumhydroxid, suspendiert in 150 g Xylol, während einer Stunde zudosiert, wobei das entstehende Wasser und weitere flüchtige Anteile abdestilliert werden. Man rührt noch zwei weitere Stunden, evakuiert dann 5 min bei 10 kPa (100 mbar), stellt drucklos und entleert den Ansatz. Es werden 2210 g blankes Harz mit dem Erweichungspunkt 105 °C und einer Lösungsviskosität von 790 mPa·s (blanke Lösung) erhalten.

### Beispiel 4 Herstellung eines Bindemittelharzes nach der ersten Ausführungsform durch Reaktion von Dicyclopentadien mit Tallölfettsäure und anschließender Umsetzung mit Kolophonium, einem Gemisch aus Calciumhydroxid und Magnesiumoxid sowie Maleinsäureanhydrid:

Man verfährt wie in Beispiel 1 angegeben mit der Abänderung, daß 40 g Calciumhydroxid im Gemisch mit 32 g Magnesiumhydroxid eingesetzt werden.

Es werden 2204 g blankes Harz vom Erweichungspunkt 135 °C und der Lösungsviskosität 4300 mPa·s erhalten.

### Beispiel 5 Herstellung eines Bindemittelharzes nach der dritten Ausführungsform durch Reaktion von Dicyclopentadien mit Tallölfettsäure und Kolophonium und anschließender Umsetzung mit Maleinsäureanhydrid und Magnesiumoxid:

Man verfährt wie in Beispiel 3 angegeben mit der Abänderung, daß als Metallverbindung 60 g Magnesiumhydroxid eingesetzt werden. Es werden 1160 g blankes Harz vom Erweichungspunkt 135 °C und der Lösungsviskosität 19000 mPa·s erhalten.

### Beispiel 6 Herstellung eines Bindemittelharzes nach der ersten Ausführungsform durch Reaktion von Dicyclopentadien mit Tallölfettsäure und anschließender Umsetzung mit Kolophonium, Zinkoxid und Maleinsäureanhydrid:

Man verfährt wie in Beispiel 1 angegeben mit der Abänderung, daß als Metallverbindung 117 g Zinkoxid eingesetzt werden. Es werden 2215 g blankes Harz vom Erweichungspunkt 115 °C und der Lösungsviskosität 75 mPa·s erhalten.

### Beispiel 7 Herstellung eines Bindemittelharzes nach der ersten Ausführungsform durch Reaktion von Dicyclopentadien mit Tallöl und anschließender Umsetzung mit Kolophonium, Calciumhydroxid und Maleinsäureanhydrid:

In einer 2 l-Stahlapparatur werden 430 g Tallöl auf 260 °C erhitzt. Dazu werden innerhalb von 6 h 287 g Dicyclopentadien mit einem Gehalt von 80 % Cyclopentadien-Einheiten zudosiert und weitere 5 h unter Rühren bei dieser Temperatur gehalten; dabei bildet sich der zunächst auf 0,4 MPa (4 bar) gestiegene Druck auf 0,25 MPa (2,5 bar) zurück. Dann wird auf Normaldruck entspannt. Die durch Gelpermeationschromatographie ermittelte gewichtsmittlere molare Masse M_{w} einer Probe beträgt 16500 g/mol. Danach gibt man 377 g Kolophonium zu und rührt eine halbe Stunde nach. Dann werden 59 g Calciumhydroxid, suspendiert in 150 g Xylol, während einer Stunde zudosiert, wobei das entstehende Wasser und weitere flüchtige Anteile abdestilliert werden. Man rührt noch eine halbe Stunde nach und dosiert anschließend während 5 min 46 g Maleinsäureanhydrid zu. Man rührt noch zwei weitere Stunden, evakuiert dann 5 min bei 10 kPa (100 mbar), stellt auf Atmosphärendruck und entleert den Ansatz. Es werden 1115 g blankes Harz mit dem Erweichungspunkt 95 °C und einer Lösungsviskosität von 760 mPa·s (blanke Lösung) erhalten.

### Beispiel 8 Herstellung eines Bindemittelharzes durch Reaktion von Dicyclopentadien mit Rizinusöl und anschließender Umsetzung mit Kolophonium, Maleinsäureanhydrid und Calciumhydroxid:

In einer 6 l-Druckapparatur werden 1080 g Rizinusöl auf 260 °C erhitzt. Dann werden innerhalb von 6 h 2520 g techn. Dicyclopentadien (mit einem Massenanteil an Cyclopentadieneinheiten von 80 %) so zudosiert, daß der Innendruck der druckdichten Apparatur nicht über 0,4 MPa (4 bar) ansteigt. Man läßt noch 4 h nachreagieren, wobei sich der Druck bis auf 0,2 MPa (2 bar) ermäßigt und entspannt dann auf Normaldruck. Die durch Gelpermeationschromotographie ermittelte gewichtsmittlere molare Masse M_{w} einer Probe beträgt 12500 g/mol. Dann werden dem Ansatz 450 g Kolophonium und anschließend 36 g Maleinsäureanhydrid zugefügt. Nachdem man eine halbe Stunde nachgerührt hat, trägt man 45 g Calciumhydroxid ein, wobei Wasser abdestilliert. Man rührt noch 2 h nach, evakuiert zur Entfernung flüchtiger Anteile 5 min bei 0,01 MPa (100 mbar), belüftet mit Stickstoff und isoliert das Harz durch Abkühlen. Es werden 3840 g eines festen Harzes mit dem Erweichungspunkt 115 °C und der Lösungsviskosität 7600 mPa·s erhalten.

### Beispiel 9 Herstellung eines Bindemittelharzes, bei dem die Polymerisation in einem Lösungsmittel erfolgt:

In einer 6 l-Druckapparatur, die druckdicht verschlossen ist, werden 432 g Tallölfettsäure und 925 g Xylol auf 260 °C erhitzt, wobei sich ein Druck von 1,12 MPa (11,2 bar) einstellt. Dazu werden innerhalb 5 h 1728 g techn. Dicyclopentadien (mit einem Massenanteil an Cyclopentadieneinheiten von 80 %) zudosiert. Man rührt noch 4 h nach und entspannt langsam auf Normaldruck, wobei das Xylol abdestilliert. Dann werden 277 g Maleinsäureanhydrid zugefügt. Nach einer halben Stunde fügt man dem Ansatz noch 1535 g Kolophonium zu und tropft anschließend 70 g Calciumhydroxid und 38 g Magnesiumoxid, suspendiert in 200 g Xylol, zu. Man rührt noch 2 h nach und entfernt flüchtige Anteile durch kurzes Evakuieren.

Nach Abkühlen werden 3790 g Festharz mit dem Erweichungspunkt 132 °C und der Lösungsviskosität 135 mPa·s erhalten.

Eine Probe des Harzes weist nach fünfstündigem Erhitzen bei 250 °C eine Lösungsviskosität von 147 mPa·s auf, d.h.das Harz zeigt eine sehr gute thermische Stabilität. Beim Arbeiten unter Fabrikationsbedingungen ist dies wichtig, da beim Austrag aus dem Reaktionskessel ein gleichmäßiges Produkt erhalten werden soll.

### Beispiel 10 Herstellung eines Bindemittelharzes, bei dem die Umsetzung durch Säurezusatz vervollständigt wird:

Man verfährt wie im Beispiel 9 angegeben mit der Abänderung, daß 78 g Calciumhydroxid und 42 g Magnesiumoxid umgesetzt werden und 0,5 h nach Zugabe der Metallverbindungen der Ansatz zusätzlich mit 30 g Essigsäure versetzt wird.

Es werden 3795 g Festharz mit dem Erweichungspunkt 147 °C und der Lösungsviskosität 320 mPa·s erhalten.

### Beispiel 11 Herstellung eines Bindemittelharzes durch Reaktion von Dicyclopentadien und Styrol mit Tallölfettsäure und anschließender Umsetzung mit Kolophonium, Maleinsäureanhydrid und Calciumhydroxid:

In einem 1 l-Druckkessel werden im druckdicht verschlossenen Kessel 140 g Tallölfettsäure auf 260 °C erhitzt. Gegen den sich aufbauenden Druck wird ein Gemisch aus 210 g techn. Dicyclopentadien (mit einem Massenanteil an Cyclopentadieneinheiten von 80 %) und 210 g Styrol innerhalb von 5 h zudosiert. Man rührt noch 4 h nach, entspannt auf Normaldruck und fügt dem Ansatz 294 g Kolophonium und 36 g Maleinsäureanhydrid zu. Man rührt noch 0,5 h nach, tropft eine Suspension von 47 g Calciumhydroxid in 60 g Xylol und danch 8 g Essigsäure zu. Nachdem alles Reaktionswasser abdestilliert ist, wobei eine Reaktionszeit von 2 h notwendig ist, wird kurz Unterdruck angelegt. Nach Erkalten werden 878 g eines spröden Harzes mit dem Erweichungspunkt 105 °C und der Lösungsviskosität 53 mPa·s erhalten.

### Beispiel 12 Herstellung eines Bindemittelharzes durch Reaktion von Dicyclopentadien mit Sojaöl und anschließender Umsetzung mit Kolophonium, Maleinsäureanhydrid und Calciumhydroxid:

Man verfährt wie im Beispiel 8 angegeben mit der Abänderung, daß 208 g Sojaöl und 388 g Dicyclopentadien umgesetzt werden. Die durch Gelpermeationschramotographie ermittelte gewichtsmittlere molare Masse Mw einer Probe beträgt 8953 g/mol. Dann wird weiter mit 314 g Kolophonium, 38 g Maleinsäureanhydrid und 33 g Calciumhydroxid umgesetzt. Es werden nach Anlegen von Unterdruck 912 g Festharz mit dem Erweichungspunkt 98 °C und der Lösungsviskosität 150 mPa·s erhalten.

### Vergleichsbeispiel 1

Nach US.A 4,552,592 wird analog deren Beispiel 3 ein Bindemittelharz mit der Lösungsviskosität 115 mPa·s hergestellt. Das Harz besitzt bei 250 °C und einem Schergefalle von 100 s⁻¹ eine Schmelzeviskosität von 12 400 mPa·s.

### Vergleichsbeispiel 2

Nach US-A 4,552,592 wird analog deren Beispiel 3 ein Bindermittelharz hergestellt, bei dem der Calciumhydroxid-Einstand durch die äquivalente Menge Magnesiumhydroxid ersetzt wird. Es wird ein trübes Harz erhalten, das sich nicht vollständig in Toluol lösen läßt.

### Vergleichsbeispiel 3

Nach DE-A 35 31 242 wird analog deren Beispiel 5 ein Bindemittelharz der Lösungsviskosität 145 mPa·s (Lösung in Toluol, 50 %) hergestellt.

### Anwendungstechnisches Beispiel 1

Nach üblichen Verfahren werden jeweils aus den Bindemittelharzen des Beispiels 1 (Farbe A), des Beispiels 2 (Farbe B) und 3 (Farbe C) sowie des Vergleichsbeispiels 1 (Farbe D) nach den üblichen Methoden durch Dispergieren einer Mischung von
- 25 g: Bindemittelharz
- 7 g: Ruß ® Printex 300 (Degussa AG)
- 68 g: Toluol

Farben für den Illustrationstiefdruck hergestellt und im Tiefdruckverfahren stark saugendes Naturpapier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60° gemessen.

Die Scheuerfestigkeit der Druckfilme wird mit dem Gerät Prüfbau-Quadrant bei 50 Hüben und einer Belastung von 600 g bestimmt und mit Noten von 1 bis 6 bewertet. 1 bedeutet dabei eine sehr gute, 6 eine sehr schlechte Scheuerfestigkeit.

Das Durchschlageverhalten wird visuell beurteilt. Dabei bedeutet die Note 1 kein Durchschlagen auf die Rückseite des Bedruckstoffs und die Note 6 maximales Durchschlagen.

| | Farbe A | Farbe B | Farbe C | Farbe D |
|---|---|---|---|---|
| Glanz in % | 18,5 | 18 | 18 | 14 |
| Scheuerfestigkeit | 2 | 2 | 2 | 5 |
| Durchschlagen | 2 | 2 | 2 | 4 |

Die erfindungsgemäßen Produkte erweisen sich bezüglich Dispergierwirkung für Ruß, dem Durchschlageverhalten und der daraus resultierenden Glanzentwicklung der Farben wie auch der Scheuerfestigkeit dem Bindemittelharz des Standes der Technik überlegen.

### Anwendungstechnisches Beispiel 2

Nach üblichem Verfahren werden jeweils aus den Bindemittelharzen des Beispiels 1 (Farbe E) sowie des Vergleichsbeispiels 3 (Farbe F) nach den üblichen Methoden durch Dispergieren einer Mischung von
- 25: g Bindemittelharz
- 8 g: ® Litholrubin D 4650 (Rotpigment, Fa. BASF AG)
- 67 g: Toluol
Farben für den Illustrationstiefdruck hergestellt.

Dann wird mit einem Rakel auf stark saugendem Naturpapier sechsmal hintereinander eine jeweils 6 µm starke Farbschicht aufgezogen, so daß ein 36 µm dicker Farbfilm entsteht. Dann wird mittels sensorischer Prüfung mit dem Finger festgestellt, nach welcher Zeit auf dem Film kein Abdruck mehr sichtbar ist und dies als Maß für die Trocknungszeit herangezogen. Bei Farbe E ist dies nach 37 s, bei Farbe F erst nach 53 s der Fall. Die mit erfindungsgemäßen Harz hergestellte Farbe trocknet also wesentlich schneller als die mit dem Vergleichsharz hergestellte Farbe.

## Patentansprüche

1. Modifiziertes Kohlenwasserstoffharz herstellbar durch Umsetzung von jeweils mindestens einer Verbindung aus jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomere mit Polymerisationsgraden von 2 bis 10,
B) Fettsäuren und/oder Fettsäureester,
C) Naturharze und/oder Naturharzsäuren,
D) α,β-olefinisch ungesättigte Carbonsäuren und deren Anhydriden,
E) Verbindungen zweiwertiger Metalle,
dadurch gekennzeichnet, daß die Umsetzung in mindestens zwei Stufen durchgeführt wird, und daß in der ersten Stufe jeweils mindestens eine Verbindung der Gruppen A) und B), und in den nachfolgenden Stufen das Reaktionsprodukt aus der vorigen Stufe mit jeweils mindestens einer Verbindung der Gruppen D) und E) umgesetzt werden, wobei die Umsetzungen der beiden ersten Stufen jeweils in Gegenwart mindestens einer Verbindung der Gruppe C) stattfinden.

2. Modifiziertes Kohlenwasserstoffharz nach Anspruch 1, dadurch gekennzeichnet, daß die Umsetzung in zwei Stufen durchgeführt wird.

3. Modifiziertes Kohlenwasserstoffharz nach Anspruch 1, dadurch gekennzeichnet, daß die Umsetzung unter einem Druck von mindestens 0,1 MPa (1 bar) durchgeführt wird.

4. Modifiziertes Kohlenwasserstoffharz nach Anspruch 1, dadurch gekennzeichnet, daß die Umsetzung bei einer Temperatur von 100 bis 300 °C durchgeführt wird.

5. Modifiziertes Kohlenwasserstoffharz nach Anspruch 2, dadurch gekennzeichnet, daß die Umsetzung in der ersten Stufe der Verbindungen der Substanzgruppen A) und B) im Druckbereich unterhalb 1,5 MPa (15 bar) stattfindet.

6. Modifiziertes Kohlenwasserstoffharz nach Anspruch 2, dadurch gekennzeichnet, daß die Umsetzung in der ersten Stufe der Verbindungen der Substanzgruppen A) und B) im Druckbereich von 0,1 bis 0,6 MPa (1 bis 6 bar) stattfindet.

7. Modifiziertes Kohlenwasserstoffharz nach Anspruch 1, dadurch gekennzeichnet, daß die Reaktion im Temperaturbereich von 220 bis 270 °C durchgeführt wird.

8. Modifiziertes Kohlenwasserstoffharz nach Anspruch 2, dadurch gekennzeichnet, daß die Umsetzung des Reaktionsprodukts der ersten Stufe mit den Verbindungen der Gruppen D) und E) drucklos erfolgt.

9. Modifiziertes Kohlenwasserstoffharz nach Anspruch 1, dadurch gekennzeichnet, daß in der ersten Stufe jeweils mindestens eine der Verbindungen der Gruppe A) und B) miteinander umgesetzt werden, in der zweiten Stufe das Produkt der ersten Stufe mit jeweils mindestens einer Verbindung aus den Gruppen C) und D) umgesetzt wird, und in der dritten Stufe das Produkt der zweiten Stufe mit mindestens einer Verbindung aus der Gruppe E) umgesetzt wird.

10. Modifiziertes Kohlenwasserstoffharz nach Anspruch 1, dadurch gekennzeichnet, daß in der ersten Stufe jeweils mindestens eine der Verbindungen der Gruppe A) und B) miteinander umgesetzt werden, in der zweiten Stufe das Produkt der ersten Stufe mit jeweils mindestens einer Verbindung aus den Gruppen C) und E) umgesetzt wird, und in der dritten Stufe das Produkt der zweiten Stufe mit mindestens einer Verbindung aus der Gruppe D) umgesetzt wird.

11. Modifiziertes Kohlenwasserstoffharz nach Anspruch 1, dadurch gekennzeichnet, daß in der ersten Stufe jeweils mindestens eine der Verbindungen der Gruppe A), B) und C) miteinander umgesetzt werden, in der zweiten Stufe das Produkt der ersten Stufe mit mindestens einer Verbindung aus der Gruppe D) umgesetzt wird, und in der dritten Stufe das Produkt der zweiten Stufe mit mindestens einer Verbindung aus der Gruppe E) umgesetzt wird.

12. Modifiziertes Kohlenwasserstoffharz nach Anspruch 1, dadurch gekennzeichnet, daß die Massenanteile bezogen auf die Summe der Massen aller Edukte, für die Komponenten
A) 10 bis 90 %,
B) 1 bis 90%,
C) 1 bis 90 %,
D) 0,1 bis 20 %,
E) 0,1 bis 20 % betragen.

13. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien eingesetzt werden.

14. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien im Gemisch mit gegebenenfalls Piperylen, gegebenenfalls Styrol und gegebenenfalls Inden eingesetzt werden

15. Modifiziertes Kohlenwasserstoffharz nach Anspruch 1, dadurch gekennzeichnet, daß die Verbindungen zweiwertiger Metalle ausgewählt werden aus den Oxiden, Hydroxiden, Acetaten, Stearaten und Oleate des Magnesiums, Calciums und Zinks.

16. Modifiziertes Kohlenwasserstoffharz nach Anspruch 1, dadurch gekennzeichnet, daß als Metallverbindung eine Magnesiumverbindung eingesetzt wird.

17. Modifiziertes Kohlenwasserstoffharzes nach Anspruch 1, dadurch gekennzeichnet, daß als Metallverbindung eine Zinkverbindung eingesetzt wird.

18. Modifiziertes Kohlenwasserstoffharzes nach Anspruch 1, dadurch gekennzeichnet, daß als Metallverbindung eine Calciumverbindung eingesetzt wird.

19. Modifiziertes Kohlenwasserstoffharz nach Anspruch 1, dadurch gekennzeichnet, daß als Verbindung der Substanzgruppe B) Tallölfettsäure eingesetzt wird.

20. Modifiziertes Kohlenwasserstoffharz nach Anspruch 1, dadurch gekennzeichnet, daß als Verbindung der Substanzgruppe B) ein Fettsäureglycerinester eingesetzt wird.

21. Modifiziertes Kohlenwasserstoffharz nach Anspruch 1, dadurch gekennzeichnet, daß die Umsetzung der Verbindungen der Gruppe E) in Gegenwart von Carbonsäuren erfolgt.

22. Modifiziertes Kohlenwasserstoffharz nach Anspruch 1 oder 2, dadurch gekennzeichnet, daß die durch Umsetzung von A) mit B) und gegebenenfalls C) entstandenen Copolymerisate eine gewichtsmittlere molare Masse von 800 bis 40 000 g/mol aufweisen.

23. Modifiziertes Kohlenwasserstoffharz nach Anspruch 1, dadurch gekennzeichnet, daß seine Lösung in Toluol (Massenanteil des Harzes 50 %) bei 23 °C eine Viskosität von 100 bis 5 000 mPa·s aufweist.

24. Modifiziertes Kohlenwasserstoffharz nach Anspruch 1, dadurch gekennzeichnet, daß seine durch Gelpermeationschromatographie an Polystyrolgel ermittelte mittlere molare Masse M_{w} zwischen 1 000 und 50 000 g/mol liegt.

25. Modifiziertes Kohlenwasserstoffharz nach Anspruch 1, dadurch gekennzeichnet, daß seine Schmelzviskosität bei 250 °C und einem Schergefalle von 100 s⁻¹ zwischen 1 000 und 5 000 mPa·s liegt.

26. Verwendung der modifizierten Kohlenwasserstoffharze nach Anspruch 1 in Pigmentanreibungen und Pigmentkonzentraten.

27. Verwendung der modifizierten Kohlenwasserstoffharze nach Anspruch 1 in Druckfarben.

28. Verwendung der modifizierten Kohlenwasserstoffharze nach Anspruch 1 in Druckfarben für den Tiefdruck mit Toluol.
